# EUROPÄISCHE PATENTANMELDUNG

(11) **EP 3 771 693 A1**
(43) Veröffentlichungstag der Anmeldung: **03.02.2021**
(21) Anmeldenummer: 19189137.3
(22) Anmeldetag: 30.07.2019
(51) Int. Cl.: C02F 1/467

(54) **WASSERDESINFEKTION**

(71) Anmelder: Lift Holding GmbH, 99820 Hörselberg-Hainich (DE)
(72) Erfinder: Dr. Montag, Dominik, 99817 Eisenach (DE)
(74) Vertreter: Freischem & Partner Patentanwälte mbB

(57) **Zusammenfassung**

Die Erfindung betrifft ein Verfahren zur Wasserdesinfektion mit Hilfe von Diamantelektrolyse in einer Durchflusszelle.

## Beschreibung

Die Erfindung betrifft ein Verfahren zur Wasserdesinfektion mit Hilfe von Diamantelektrolyse in einer Durchflusszelle.

Es gibt bereits Verfahren, bei denen Abwasser mit Hilfe von Elektroden in einem elektrolytischen Verfahren durch elektrolytische Erzeugung beispielsweise von Hydroxyl-Radikalen (OH-Radikalen) oder Ozon gereinigt wird. Dabei werden beispielsweise organische Verschmutzungen durch die Radikale zersetzt. Diese Durchflusszellen werden üblicherweise bei geringen Spannungen und geeigneter Leistung betrieben.

Die WO 2014/185868 A1 beschreibt die Desinfektion von Wasser in einer Elektrolysezelle bei einer geringen Leistung.

Die EP 2 769 619 B1 beschreibt die Elektrolyse von bakteriell verunreinigtem Wasser. Diese dort beschriebenen Durchflusszellen werden üblicherweise bei einer elektrischen Leistung von 30 Watt betrieben.

Bislang gibt es das Vorurteil, dass das Verfahren mit indirekter Kontaktierung nicht bei niedriger elektrischer Leitfähigkeit des Wassers betrieben werden kann oder soll.

Die der Erfindung zu Grunde liegende Aufgabe ist die effizientere Desinfektion von Wasser, wie beispielsweise Prozesswasser, Trinkwasser oder Abwasser.

Die der Erfindung zu Grunde liegende Aufgabe ist es, ein definiertes Medium mit möglichst wenigen, definierten Bestandteilen der Diamantelektrolyse zu unterziehen, um es zu desinfizieren und/oder zum Desinfektionsmittel zu machen.

Die der Erfindung zu Grunde liegende Aufgabe wird in einer ersten Ausführungsform durch ein Verfahren zur Wasserdesinfektion mit Hilfe von Elektrolyse mit Diamantelektroden in einer Durchflusszelle gelöst, dadurch gekennzeichnet, dass man zu desinfizierendes Wasser mit einer Leitfähigkeit in einem Bereich von 5 bis 150 µS bereitstellt und die Elektrolyse unter Durchfluss des Wassers durchführt.

Durch die Verwendung eines definierten Mediums (beispielsweise Leitfähigkeit, Elementarzusammensetzung) sollen störende Einflüsse (beispielsweise Korrosion oder Ablagerungen) anderer Bestandteile des Wassers minimiert werden. Gleichzeitig werden mit der Definition der Leitfähigkeit die elektrischen Prozessparameter eingegrenzt.

Liegt die Leitfähigkeit unterhalb des Zielbereiches (wie beispielsweise unterhalb von 5 µS), kann das zur Bildung von Hydroxylradikalen notwendige Potential zwischen den Diamantelektroden nicht ohne extrem hohe Spannungen zwischen den Kontaktierungselektroden induziert werden. Dadurch können höhere Bauteilkosten notwendig werden.

Liegt die Leitfähigkeit oberhalb dieses Zielbereiches (wie beispielsweise oberhalb von 150 µS), kann eine niedrigere Spannung angelegt werden. Aber der Strom und damit die Leistungsaufnahme müssen konsequent überwacht werden. Ein solches Verfahren entspräche dem Stand der Technik. Die eingebrachte elektrische Leistung resultiert am Ende aller möglichen chemischen Reaktionen normalerweise in einer Temperatur-Erhöhung. Erzeugter Aktivsauerstoff (Ozon) kann bei hohen Leistungen versehentlich überdosiert werden (Arbeitsschutz).

Zudem kann es durch den, in normalem Wasser, oft höheren Anteil von Halogen-Ionen (beispielsweise Chlorid) im Wasser zur Bildung von Halogenaten (Halogensauerstoffsäuren) kommen, die die Durchflusszelle und andere Bauteile am Verwendungsort durch Korrosion vorzeitig altern lassen. Daher liegt die Konzentration von Halogen-Ionen im eingesetzten Wasser vorzugsweise in einem Bereich von unter 0,28 mmol/l.

Induktion im Sinn der Erfindung ist die Potentialübertragung zwischen Kontaktierungselektroden und Diamantelektroden.

Diamantelektrolyse im Sinne der Erfindung ist die Elektrolyse mit Hilfe von Diamantelektroden.

Die Leitfähigkeit stellt man vorzugsweise mit definierten Salzen ein.

Die Leitfähigkeit liegt vorzugsweise in einem Bereich von 20 bis 100 µS. Sie wird vorzugsweise mit Salzen der Alkali- und Erdalkalimetalle eingestellt, die keine Halogene als Anionen haben (beispielsweise Formiate, Carbonate, Phosphate, Nitrate oder Sulfate), besonders bevorzugt werden die natürlichen Härtebestandteile Calcium- oder Magnesium-Carbonate (beispielsweise Ca(HCO₃)₂). Zum Lösen schwer löslicher Carbonate kann vorzugsweise auch Ameisensäure verwendet werden, die nämlich zum Formiat wird und während des Prozesses zu CO₂ (beziehungsweise Hydrogencarbonat) abgebaut wird. Besonders bevorzugt wird Lithium-Formiat zum Einstellen der Leitfähigkeit verwendet.

Vorzugsweise werden als Kationen die Metalle der elektrochemischen Spannungsreihe eingesetzt, die ein Normalpotential niedriger als -2,7 V haben (beispielsweise Natrium, Calcium, Kalium und Lithium). Die Spannung zwischen den jeweils oxidierten und reduzierten Formen der eingesetzten Anionen und Kationen bestimmen beispielsweise, ob das für die Hydroxyl-Radikal-Bildung notwenige Potential zwischen den Kontaktierungselektroden und den Diamantelektroden gut übertragen werden kann.

Vorzugsweise setzt man eine elektrische Leistung in einem Bereich von 20 bis 100 Watt ein.

Man setzt Diamantelektroden ein, die bevorzugt nichtleitend mit einer Stromquelle verbunden. Vorzugsweise wird die Spannung in den Diamantelektroden mit Hilfe von Kontaktierungselektroden erzeugt (siehe beispielsweise auch EP 2 769 619 B1). Vorzugsweise sind die Diamantelektroden mit Bor dotiert. Vorzugsweise wird mit den Kontaktierungselektroden ein solches elektrisches Feld aufgebaut, dass zwischen den Diamantelektroden ein Strom etabliert wird, der für die Desinfektionsaufgabe ausreicht.

Vorzugsweise legt man an die Kontaktierungselektroden eine elektrische Spannung in einem Bereich von 100 bis 400 Volt, besonders bevorzugt in einem Bereich von 200 bis 250 Volt, an. Wählt man die Spannung zu niedrig, so kann möglicherweise die benötigte Desinfektionsleistung nicht mehr bei jeder Leitfähigkeit des Mediums in das Medium eingebracht werden. Durch die höhere Spannung ist dieses Verfahren bei gering-leitenden Medien hoch energieeffizient. Durch die Begrenzung der Stromstärke und somit der Leistungsaufnahme (bei konstanter Spannung) wird das Verfahren unabhängig von der Qualität des Mediums. Vorzugsweise werden jedoch Wässer mit niedriger Leitfähigkeit mit definierten Elektrolyten beziehungsweise Salzen eingesetzt, um das Verfahren primär auf die Produktion von Hydroxylradikalen zu begrenzen und die Entstehung reaktiver Halogene zu vermeiden.

Ein Vorteil von einer Spannung im Bereich von 200 bis 250 Volt ist, dass in diesem Fall nach Umwandlung von Wechselstrom (Netzspannung) in Gleichstrom keine Spannungstransformation benötigt wird.

Die notwendige Spannung hängt unter anderem vom Leitwert des Wassers ab. Bei geringeren Leitwerten wird vorzugsweise eine höhere Spannung benötigt. Daher wird im erfindungsgemäßen Verfahren vorzugsweise ein Leitwertsensor zur Bestimmung des Leitwerts des zu desinfizierenden Wassers eingesetzt.

Vorzugsweise setzt man eine elektrische Stromstärke in einem Bereich von 0,1 bis 0,6 Ampere, besonders bevorzugt in einem Bereich von 0,2 bis 0,4 Ampere, ein.

Vorzugsweise wird die Desinfektionsleistung durch eine festgelegte elektrische Spannung und eine nach oben begrenzte Stromstärke geregelt. Die Stromstärke wird vorzugsweise mit einem Strombegrenzer nach oben hin begrenzt.

Vorzugsweise setzt man im erfindungsgemäßen Verfahren Gleichstrom ein.

Vorzugsweise wird der Strom durch eine Photovoltaik-Anlage erzeugt. Das hat die Vorteile, dass der Strom aus einer erneuerbaren Quelle stammt und direkt als Gleichstrom vorliegt. Das heißt, dass der Strom nicht mehr von Wechselstrom zu Gleichstrom gewandelt werden muss (Energieeffizienz).

Vorzugsweise ist das Verfahren zur Wasserdesinfektion ein Verfahren zur Desinfektion von Trink-, Brauch-, Ab-, Prozess- oder Schwimmbadwasser. Dadurch kann beispielsweise ein Schwimmbad quasi chlorfrei betrieben oder Prozesswasser kann mit geringer Leitfähigkeit effizient desinfiziert werden.

Das Verfahren kann aber auch in der Lebensmittelindustrie (beispielsweise Desinfektion oder Bio-Dekontamination), Automobil-, Pharma-, Medizin-, Maschinenbau-, Halbleiterindustrie und/oder chemischen Industrie eingesetzt werden.

Vorzugsweise wird in dem erfindungsgemäßen Verfahren ein elektrischer Energieaufwand in einem Bereich von 10 bis 20 kWh/m³ eingesetzt, um in einer standardisierten Situation von einem Kubikmeter von industriellem Abwasser den Summenparameter CSB (chemischer Sauerstoffbedarf) um 100 mg O₂ pro Liter zu reduzieren. Für Abwasserreinigung (nicht Desinfektion) ist die erforderliche Leistung natürlich abhängig vom qualitativen und quantitativen Verschmutzungsgrad, also der Art und Stoffmenge der zu oxidierenden Substanzen.

Vorzugsweise wird der Abstand zwischen den gegenüberliegenden Diamantelektroden in einem Bereich von 1 bis 5 mm eingestellt. Je näher die Elektroden beieinander liegen, umso effizienter ist die Ladungsübertragung, aber auch risikoreicher gegenüber einem Kurzschluss, der die Elektrolyse dann zum Erliegen bringen würde.

Vorzugsweise wird der Abstand zwischen den Kontaktierungselektroden und den Diamantelektroden in einem Bereich von 1 bis 5 mm eingestellt. Liegt der Abstand unterhalb dieses Bereiches, so kann es zu Kurzschlüssen kommen, die die Diamantelektroden der vollen Spannung aussetzen (beispielsweise 2,8 V gegen 300 V) und sie damit zerstören würden. Liegt der Abstand oberhalb dieses Bereiches, kann es zu einer Verringerung der Effizienz des Verfahrens kommen; Es würden noch höhere Spannungen für ein erfolgreiches Verfahren erforderlich sein.

Vorzugsweise wird eine Erhöhung der hydraulischen Leistung der Durchflusszelle (l/h) nicht durch die Erhöhung des Abstands der Elektroden, sondern hydraulische Parallelschaltung mehrerer Zellen oder der Verbreiterung des Fließspalts bei gleicher Höhe (Kontaktweg in Fließrichtung) realisiert.

Vorzugsweise ist die Oberfläche der Diamantelektroden wenigstens so groß wie die Oberflächen der Kontaktierungselektroden und besonders bevorzugt doppelt so groß wie die Innenoberfläche der Durchflusszelle. Vorzugsweise sind die Diamantelektroden bipolar.

Die Durchflussgeschwindigkeit liegt vorzugsweise in einem Bereich von 10 bis 200 l/h.

Das mit den erfindungsgemäßen Verfahren behandelte Wasser, beispielsweise das primär produzierte Desinfektionsmittel, das nach der Fließzelle keine Hydroxylradikale mehr aufweist, kann vorzugsweise in einen größeren Medienstrom (beispielsweise mehr als 200 l/h) eingeleitet werden, um dort das Medium biologisch zu stabilisieren.

Die Leistung eines fertig konzipierten Systems zur Desinfektion kann vorzugsweise vor allem über die Parameter Flussrate (Fließgeschwindigkeit) oder Stromstärke an Veränderungen der Medienqualität angepasst werden. Dies geschieht vorzugsweise wie folgt:
1. Zum einen kann bei geringen Lasten (Verunreinigung) der Strom weiter abgesenkt werden oder die Flussrate erhöht werden.
2. Bei mittleren Lasten (ausgelegte Leistung des Systems) soll vorzugsweise der Strom auf dem möglichen Maximum fahren.
3. Bei hohen Belastungen kann zusätzlich die Flussrate reduziert werden, um die lokale Oxidationsmittelkonzentration zu erhöhen. Dadurch verlängert sich die Verweildauer des Mediums in Zelle und die Kontaktwahrscheinlichkeit (Reaktionswahrscheinlichkeit, Kinetik) wird höher.

Vorzugsweise wird das Verfahren bei Raumtemperatur durchgeführt.

Durch eine Temperaturerhöhung steigt der Widerstand, und die Leitfähigkeit des Mediums (Leitwert) wird geringer.

Die folgenden Figuren veranschaulichen die Erfindung:

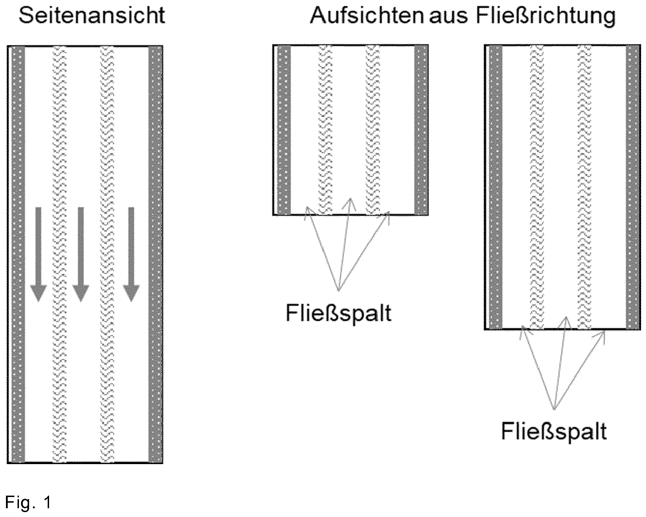

Fig. 1 zeigt den Fließspalt innerhalb der Durchflusszelle. Ganz links sieht man eine Seitenansicht des Fließspaltes durch die Durchflusszelle. In der Mitte und rechts sieht man eine Aufsicht des Fließspaltes und kann erkennen, dass der Fließspalt im Vergleich von Mitte zum rechts dargestellten Fließspalt verbreitert werden kann.

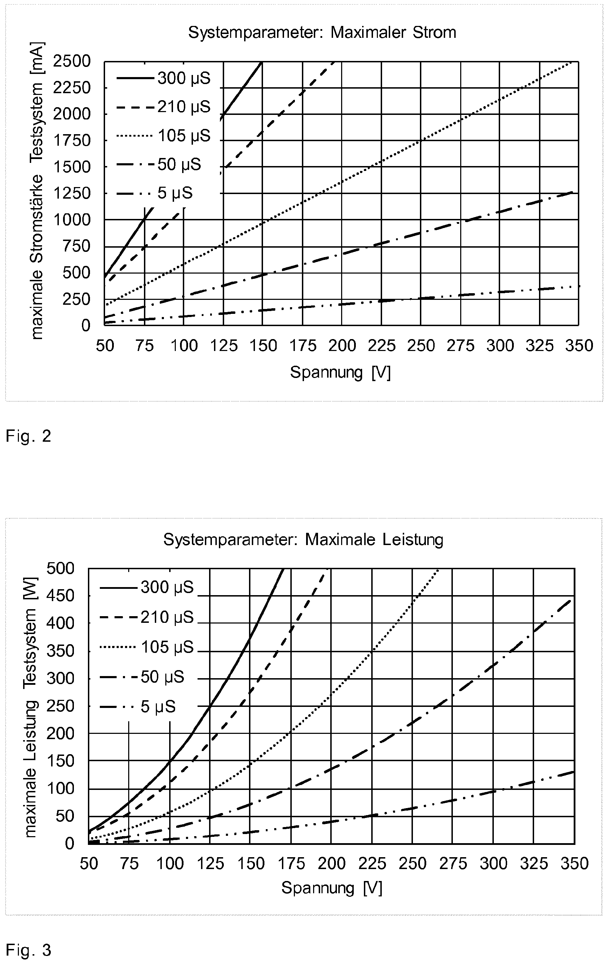

Fig. 2 zeigt den maximal möglichen Strom bei bestimmten Dimensionen des Systems (z.B. Elektrodenabstand, Temperatur, Flussgeschwindigkeit...) und zeigt den Einfluss der Leitfähigkeit bzw. Spannung auf die Stromstärke.
Fig. 3 zeigt die maximal mögliche Leistung des Systems bei bestimmten Dimensionen (z.B. Elektrodenabstand, Temperatur, Flussgeschwindigkeit...) und verdeutlicht den Zusammenhang zwischen den Parametern aus Fig. 2 mit der elektrischen Leistungsaufnahme bzw. potentiellen Desinfektionsmittel-Produktion.

### Ausführungsbeispiel

### Schadstoffabbau:

Es wurde eine Durchflusszelle der Firma pro aqua Diamantelektroden Produktion GmbH in Österreich mit Diamantelektroden eingesetzt. Durch diese Durchflusszelle wurde ein Modellabwasser mit einem genormten chemischen Sauerstoffbedarf CSB mit 1000 mg O₂ (realisiert durch 938 mg Glucose) und einer Leitfähigkeit von 120 µS geleitet. Die Leitfähigkeit wurde mit Lithium-Formiat eingestellt. Mit einer Spannung von 120 Volt und einer Stromstärke von etwa 0,5 Ampere wurde ein Feld erzeugt, mit dem eine Spannung von >2,8 Volt in mit Bor-dotierten Diamantelektroden erzeugt wurde. Die Verunreinigung konnte reduziert werden.

### Desinfektion:

Es wurde eine Durchflusszelle der Firma pro aqua Diamantelektroden Produktion GmbH in Österreich mit Diamantelektroden eingesetzt. Durch diese Durchflusszelle wurde ein modellhaft kontaminiertes Wasser mit einem genormten Bakterienkonzentration von 10⁶ KBE/ml und einer Leitfähigkeit von 120 µS geleitet. Mit einer Spannung von 120 Volt und einer Stromstärke von etwa 0,5 Ampere wurde ein Feld erzeugt, mit dem eine Spannung von >2,8 Volt in mit Bor-dotierten Diamantelektroden erzeugt wurde. Die Zellkonzentration konnte signifikant reduziert werden.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung ist nicht auf die beschriebenen Ausführungsformen beschränkt. Sie kann im Rahmen der Ansprüche und unter Berücksichtigung der Kenntnisse des zuständigen Fachmanns variiert werden.

## Patentansprüche

1. Verfahren zur Wasserdesinfektion mit Hilfe von Elektrolyse mit Diamantelektroden in einer Durchflusszelle, **dadurch gekennzeichnet, dass** man zu desinfizierendes Wasser mit einer Leitfähigkeit in einem Bereich von 5 bis 150 µS bereitstellt und die Elektrolyse unter Durchfluss des Wassers durchführt.

2. Verfahren gemäß Anspruch 1, **dadurch gekennzeichnet, dass** man bei indirekter Kontaktierung eine elektrische Spannung in einem Bereich von 100 bis 400 Volt einsetzt.

3. Verfahren, gemäß einem der vorhergehenden Ansprüche, **dadurch gekennzeichnet, dass** man während der Wasserdesinfektion eine elektrische Leistung in einem Bereich von 20 bis 100 Watt einsetzt.

4. Verfahren gemäß einem der vorhergehenden Ansprüche, **dadurch gekennzeichnet, dass** die Desinfektionsleistung durch eine festgelegte elektrische Spannung und einer nach oben begrenzten Stromstärke geregelt wird.

5. Verfahren gemäß einem der vorhergehenden Ansprüche, **dadurch gekennzeichnet, dass** der Strom durch eine Photovoltaik-Anlage erzeugt wird.

6. Verfahren gemäß einem der vorhergehenden Ansprüche, **dadurch gekennzeichnet, dass** ein elektrischer Energieaufwand in einem Bereich von 10 bis 20 kWh/m³ eingesetzt wird, um in einer standardisierten Situation von einem Kubikmeter von industriellem Abwasser den Summenparameter CSB um 100 mg O₂ pro Liter zu reduzieren.

7. Verfahren gemäß einem der vorhergehenden Ansprüche, **dadurch gekennzeichnet, dass** der Abstand zwischen den gegenüberliegenden Diamantelektroden in einem Bereich von 1 bis 5 mm eingestellt wird.

8. Verfahren gemäß einem der vorhergehenden Ansprüche, **dadurch gekennzeichnet, dass** der Abstand zwischen den Kontaktierungselektroden und den Diamantelektroden in einem Bereich von 1 bis 5 mm eingestellt wird.

9. Verfahren gemäß einem der vorhergehenden Ansprüche, **dadurch gekennzeichnet, dass** die Oberfläche der Diamantelektroden wenigstens so groß ist wie die Oberfläche der Kontaktierungselektroden und besonders bevorzugt bis zu doppelt so groß wie die Innenoberfläche der Durchflusszelle ist.

10. Verfahren gemäß einem der vorhergehenden Ansprüche, **dadurch gekennzeichnet, dass** die Durchflussgeschwindigkeit in einem Bereich von 10 bis 200 l/h liegt.
